# EUROPEAN PATENT SPECIFICATION

(11) **EP 4 542 725 B1**
(45) Date of publication and mention of the grant of the patent: **06.05.2026**
(21) Application number: 23204646.6
(22) Date of filing: 19.10.2023
(51) Int. Cl.: H01M 10/48, B60L 58/26, H01M 10/613, H01M 10/625, H01M 10/6556, H01M 50/249

(54) **BATTERY SYSTEM AND METHOD FOR MONITORING A BATTERY SYSTEM**
BATTERIESYSTEM UND VERFAHREN ZUR ÜBERWACHUNG EINES BATTERIESYSTEMS
SYSTÈME DE BATTERIE ET PROCÉDÉ DE SURVEILLANCE D'UN SYSTÈME DE BATTERIE

(43) Date of publication of application: 23.04.2025
(73) Proprietor: Samsung SDI Co., Ltd., Yongin-si, Gyeonggi-do 17084 (KR)
(72) Inventor: Erhart, Michael, 8054 Seiersberg-Pirka (AT)
(74) Representative: Gulde & Partner

(56) References cited:
- CN-U- 215 816 019
- DE-A1- 102019 210 852
- KR-A- 20120 054 770
- US-A1- 2015 171 486
- US-A1- 2020 161 717

## Description

### Field of the Disclosure

The present disclosure relates to a battery system and a method for monitoring the battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable or secondary battery differs from a primary battery in that it is designed to be repeatedly charged and discharged, while the latter is designed to provide only an irreversible conversion of chemical to electrical energy. Low-capacity rechargeable batteries are used as a power supplies for small electronic devices, such as cellular phones, notebook computers and camcorders, while high-capacity rechargeable batteries are used as a power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithiumion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*)*.*

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

Battery systems according to the related art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

A thermal management system to provide thermal control of the battery pack is often included to safely use the at least one battery module by efficiently emitting, discharging and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus, charging and discharging performance of the rechargeable deteriorates and the life-span of the rechargeable battery is shortened. Thus, cell cooling for effectively emitting, discharging, and/or dissipating heat from the cells is important.

It is common that a battery pack has a cooler on the bottom side of the battery pack to cool the battery cells. Typically, an underbody structure is in place and used to protect the battery cell against an underbody contact events. If the electric vehicle drives over loose ground and stones are thrown up or a foreign object touches the ground plate of the electric vehicle, this might create an underground contact event. The underbody structure is designed in a way that the force will be distributed into cross beams of the underbody structure. The battery cells should not be effected by such an underbody contact event.

In this respect, a battery module is known from US 2020 / 0 161 717 A1 which discloses a safety apparatus with a pressure sensor. An impact coming from the underside is detected by changes in the pressure signal in an air-filled tube that is integrated at the bottom of the battery module. Struts are provided in the area of a base part for stiffening the base part and a battery housing of the battery module. When a bollard deforms the base part of the battery module, pressure hoses are deformed and increase the pressure of the fluid provided in the pressure hoses, which can be detected by the pressure sensors.

Furthermore, US 2015 / 0 171 486 A1 discloses a battery pack with a lower pack enclosure panel and a plurality of batteries. Interposed between the base of each cylindrical battery and the lower panel are a plurality of deformable cooling conduits through which a liquid coolant is pumped. When an object under the vehicle is forced upwards, the object causes the bottom enclosure panel to deform as well as those portions of conduits within the strike zone.

KR 2012 / 0054 770 A discloses a battery system for a vehicle including a cooler for a battery system with two metal sheets connected to each other, wherein a cooling channel and a pressure detection channel separated from the cooling channel is arranged between the two metal sheets inside of the cooler.

The problem to be solve by this invention is to simply the detection of an underground contact event and reduce the costs for the battery system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a battery system including:
- a battery pack including a housing and a plurality of battery cells accommodated within the housing;
- a cooler (thermally) connected to the battery cells and an underbody protection structure, wherein the cooler is arranged between the underbody protection structure and the battery pack, and wherein the cooler includes at least one cooling channel and at least one pressure detection channel separated from the cooling channel and arranged inside the cooler; and
- a pressure detection device with a pressure sensor (fluidly) connected to the pressure detection channel and adapted to detect an underbody contact or impact event by monitoring the pressure in the pressure detection channel by the pressure sensor.

The pressure detection channel is filled with a fluid, wherein the fluid is a gaseous medium.

According to another aspect of the present disclosure, there is provided an electric vehicle including such a battery system.

According to another aspect of the present disclosure, there is provided a cooler for a battery system including two metal sheets connected to each other, wherein at least one cooling channel and at least one pressure detection channel separated from the cooling channel is arranged between the two metal sheets inside of the cooler.

Yet another aspect of the present disclosure refers to a method for monitoring a battery system, wherein the method includes the steps of:
a) providing a battery system as described in the above-mentioned paragraphs;
b) continuously measuring a pressure of a fluid, in particular a gaseous medium in the at least one pressure detection channel;
c) detecting an underbody contact or impact event, when a pressure pulse in the at least one pressure detection channel exceeds a threshold value.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment of the invention.
- Fig. 2: illustrates a schematic side view of a battery system according to an embodiment of the invention.
- Fig. 3: illustrates an electric vehicle with a battery system according to the invention.
- Fig. 4: illustrates a flowchart of a method according to the invention for monitoring a battery system and detecting underbody contact or impact events at such a battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

### General Concept

The invention is directed to a battery system, including a battery pack including a housing and a plurality of battery cells accommodated within the housing and a cooler thermally connected to the battery cells and an underbody protection structure, wherein the cooler is arranged between the underbody protection structure and the battery pack. The cooler includes at least one cooling channel and at least one pressure detection channel separated from the cooling channel and arranged inside the cooler. The battery system further includes a pressure detection device with a pressure sensor fluidly connected to the pressure detection channel and adapted to detect an underbody contact or impact event by monitoring the pressure in the pressure detection channel by the pressure sensor. The battery system according to the invention makes it possible to easily detect an impact on an underbody protection structure of the battery system and to assess the risk of damage to the battery system by the impact on the underbody protection system. The integration of the pressure detection channel into the cooler allows an easier assembly process of the battery system and reduces costs, as additional means for detecting an impact on the underbody can be omitted. Furthermore, with a continuous monitoring of underbody contact or impact events it is possible to decrease the weight of the underbody protection structure. Threshold values for the pressure pulse in the pressure detection channel can be set, which are directly related to the severity of an impact on the underbody protection structure.

In other words, the invention is related to a battery system with a protection mechanism to easily detect underbody contact or impact events and assess the severity of the underbody contact or impact event and its impact on the battery system. This allows to repair the battery system if necessary, before a damage. Especially a damage of the cooler may lead to a malfunction or destruction of the battery system.

The invention the pressure detection channel is filled with a fluid, wherein the fluid is a gaseous medium. Gaseous media are well suited to pick up a pressure pulse and transmit it to a pressure sensor to detect the underbody contact or impact event.

For example, the gaseous medium may be air, oxygen, carbon dioxide or nitrogen. Air, oxygen, carbon dioxide or nitrogen are gases which are available at low cost and do not volatilize easily, so that a constant filling of the channels with a gaseous medium can be ensured. Therefore, these gases may be selected to fill the pressure detection channels.

According to another embodiment of the invention, the cooler includes two metal sheets connected to each other, wherein the cooling channel and the pressure detection channel are arranged between the two metal sheets. The production of the cooler from two metal sheets allows a quite cheap production of the cooler. In addition, both the cooling channels and the pressure detection channels can be integrated into such a cooler in a simple and cost-effective manner.

In an embodiment of the invention, the cooling channel and/or the pressure detection channel are implemented in at least one of the metal sheets. Implementing the cooling channel(s) or the pressure detection channel in one of the metal sheets is the easiest and less expensive way to manufacture a cooler.

In an embodiment of the invention, the cooling channel is designed as a meandering cooling channel and the pressure detection channel extents into loops of the meandering cooling channel. A combination of meander-shaped cooling channels and pressure detection channels, which are arranged in the loops of the meander, allows both good cooling of the battery system and uniform coverage with pressure detection channels, so that a contact or impact in all areas of the underbody can be detected and evaluated correspondingly well.

According to another embodiment of the invention, the underbody protection structure includes at least one support element adapted to distribute a force due to an underbody contact or impact event into the support element via the cooler. The support element allows the forces from the underbody protection structure to be introduced into the cooler and deflected from the area of the battery cells of the battery system. This reduces the risk of a battery cell being damaged by an underbody contact or impact event.

In an embodiment of the invention, the support element includes one or more cross beams. Cross beams make it possible to absorb forces in the X-direction as well as in the Y-direction. In addition, in the case of an underbody contact or impact event, the cross beams can serve as deformation elements which deform in the Z-direction, so that impact forces are reduced by elastic or plastic deformation of the cross beams and are only introduced into the cooler to a reduced extent. This can further reduce the risk of damage to the cooler and/or a battery cell of the battery system.

In an embodiment of the invention, the support element is adapted to distribute a force occurring due to an underbody event into an area of the cooler, wherein the pressure detection channel is arranged in this area of the cooler. This makes the detection and the assessment of an underbody contact or impact event more precise and allows to assess, whether a contact or impact event of the underbody protection structure is critical to the cooler or the battery cells or not.

In another embodiment of the invention, the underbody protection structure includes protrusions located on the side of the underbody protection structure facing away from the battery pack. The protrusions can act as stiffening ribs to increase the strength of the underbody protection structure. Furthermore, the protrusions can be removed from the underbody protection structure as wear material in the event of underbody contact or underbody impact, so that the durability of the underbody protection structure can be increased. This can improve the protection of the cooler and the battery cells of the battery system.

In an embodiment of the invention, the cooler is manufactured by a roll-bonding process. A roll-bonding process is a process for building radiators or cooler in a simple and cost-effective way. A roll-bonding process allows to join the two metal sheets of the cooler by a high-pressure rolling process. This allows a fluid-tight connection to be made between the two metal sheets, as is typical for coolers.

In yet another embodiment of the invention, the cooling channel and/or the pressure detection channel are formed by a high-pressure forming process. For this purpose, a fluid is fed under high pressure into the channels of the cooler to inflate them to their desired shape and build the cooling channels and the pressure detection channels.

According to another aspect of the present disclosure, the invention is related to an electric vehicle including a battery system as described in the above-mentioned paragraphs. It is common that electric vehicles have a battery system located in an underbody position of the vehicle. While driving the electric vehicle an underbody contact or impact event can occur by whirled up stones or other subjects or by the electric vehicle driving over bollard, stones or similar objects hitting the underground protection structure. This causes an underbody contact or impact event that could damage the cooler or the battery cells of the battery systems. The pressure detection channels do not only detect such an underground body contact event, but also allow to assess the severity of such an underbody contact event.

If the impact is light, the cooler and the battery cells will most likely not be affected by the impact. It is possible to set a fist threshold value for the pressure pulse resulting from an underbody contact event which is deemed to be uncritical to the battery system. If the pressure pulse exceeds this first threshold value, a check for the battery system is recommended. Such a recommendation can be sent to the dashboard of the electric vehicle to inform the drives that an underbody contact event has occurred which could have led to a possible damage of the battery system. If the pressure pulse exceeds a second threshold value, it is likely that the impact was that hard, that the cooler and/or a battery cell of the battery system was damaged. A damage of the cooler can lead to an insufficient cooling of the battery cells of the battery system an could lead to a thermal damage of at least one battery cell. In case of a damaged battery cell electrolyte might run out off the damaged battery cell and may cause a severe damage to the other cells of the battery system. Furthermore, the electrolyte running out off the battery cell might also increase the risk for burning battery cells and a thermal runaway of the battery system and must be avoided under any circumstances. If the pressure pulse exceeds the second threshold value, the driver is informed about a severe underbody impact event and prompted to go to a repair station to check the battery system without any further delay.

According to another aspect of the invention, it is provided a cooler for a battery system, as described in the above-mentioned paragraphs, including two metal sheets connected to each other, wherein at least one cooling channel and at least one pressure detection separated from the cooling channel are arranged between the two metal sheets inside of the cooler. The cooler includes a plurality of cooling channels and a plurality of pressure detection channels arranged within the two metal sheets of the cooler. The cooler allows an easy integration of the pressure detection channel and a cooling channel into the cooler, to simplify the assembly of the battery system and allow in a simple way a permanent monitoring of the battery system for underbody contact or impact events that could lead to a damage of the battery system.

Yet another aspect of the invention is directed to a method for monitoring a battery system, wherein the method includes the following steps of:
a) providing a battery system as described in the above-mentioned paragraphs;
b) continuously measuring a pressure of a fluid, for example, a gaseous medium in the at least one pressure detection channel; and
c) detecting an underbody contact or impact event, when a pressure pulse in the at least one pressure detection channel exceeds a threshold value.

The method allows a permanent monitoring of the battery system for underbody contact or impact events. The method allows not only to detect such an underground body contact event, but also allow to assess the severity of such an underbody contact event. If the impact is light, the cooler and the battery cells will most likely not be affected by the impact. It is possible to set a fist threshold value for the pressure pulse resulting from an underbody contact event which is deemed to be uncritical to the battery system. If the pressure pulse exceeds this first threshold value, a check for the battery system is recommended. Such a recommendation can be sent to the dashboard of the electric vehicle to inform the drives that an underbody contact event has occurred which could have led to a possible damage of the battery system. If the pressure pulse exceeds a second threshold value, it is likely that the impact was that hard, that the cooler and/or a battery cell of the battery system was damaged. A damage of the cooler can lead to an insufficient cooling of the battery cells of the battery system an could lead to a thermal damage of at least one battery cell. Therefore, the driver is requested to immediately drive to a workshop and have the battery system checked in order to avoid consequential damage to the battery system or a danger to the environment, especially due to leaking electrolyte.

### Specific Embodiments

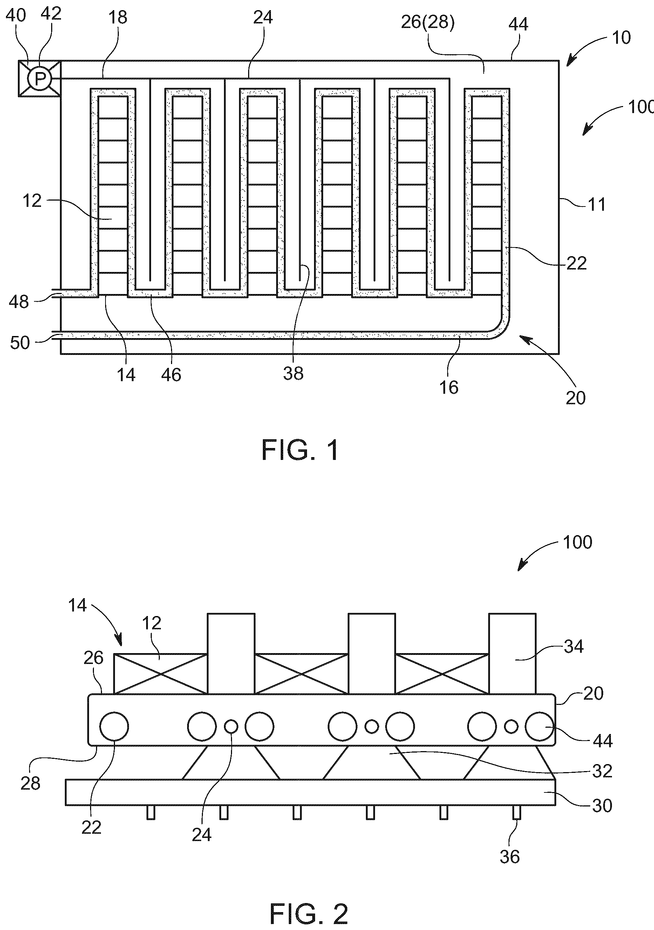

Fig. 1 is a top view illustrating of an embodiment of a battery system 100 according to the invention. The battery system 100 includes a battery pack 10 with a plurality of battery cells 12 arranged in at least one battery cell stack 14. The battery pack 10 further includes a housing 11 in which the battery cells 12 of the at least one battery cell stack 14 are arranged.

The battery system 100 further includes a cooler 20 fluidly connected to the battery back 10 to cool the battery cells 12 to transfer heat from the battery cells 12 via a cooling liquid 16. The cooler 20 is thermally connected to the battery cells 12 of the battery pack 10. The cooler 20 includes an inlet 48 and an outlet 50 connected by at least one cooling channel 22. The cooler 20 further includes at least one pressure detection channel 24 separated from the cooling channel 22.

In the embodiment described in Fig. 1, the cooler 20 includes a meandering cooling channel 22 with a pressure detection channel 24, including a main channel 18 connected to a pressure detection device 40 and a plurality of stub channels 38 extending from the main channel 18 into loops 46 of the meander of the cooling channel 22. The cooler 20 includes a first metal sheet 26 and a second metal sheet 28, wherein the at least one cooling channel 22 and the at least one pressure detection channel 24 are arranged in a cavity, which is bounded by the two metal sheets 26, 28. The first metal sheet 26 and the second metal sheet 28 are connected by a fluid tight connection 44 which can be achieved by a roll-bonding or welding process of the two metal sheets 26, 28.

The battery systems 100 further includes an underbody protection structure 30 (see Fig. 2) to protect the battery system 100 from underbody contact or impact events. The underbody protection structure 30 includes at least one support element 32 (see Fig. 2). The support element 32 is arranged to introduce a force acting on the underbody protection structure 30 into the cooler 20 and thus to prevent mechanical overloading of the battery cells 12 in the event of an impact on the underbody protection structure 30. The cooler 20 is arranged between the underbody protection structure 30 and the battery pack 10 to enable a compact design of the battery pack 10 and a comparatively simple assembly of the battery system 100. Furthermore, the cooler 20 is designed to form a deformation zone to protect the battery pack 10 and prevent damage to the battery cells 12 in the event of a severe impact with the underbody protection structure 30.

The pressure detection device 40 includes at least one pressure sensor 42 fluidly connected to the pressure detection channel 24 to detect a pressure pulse in the pressure detection channel 24 due to an underbody contact or impact event. The pressure sensor 42 is designed to monitor the pressure in the pressure detection channel 24. It is common that a battery pack have a cooler on a bottom side to cool battery cells of the battery pack. Thus, the cooler 20 may be covered by the underbody protection structure 30 which protects the battery pack 10 against underbody contact or impact events.

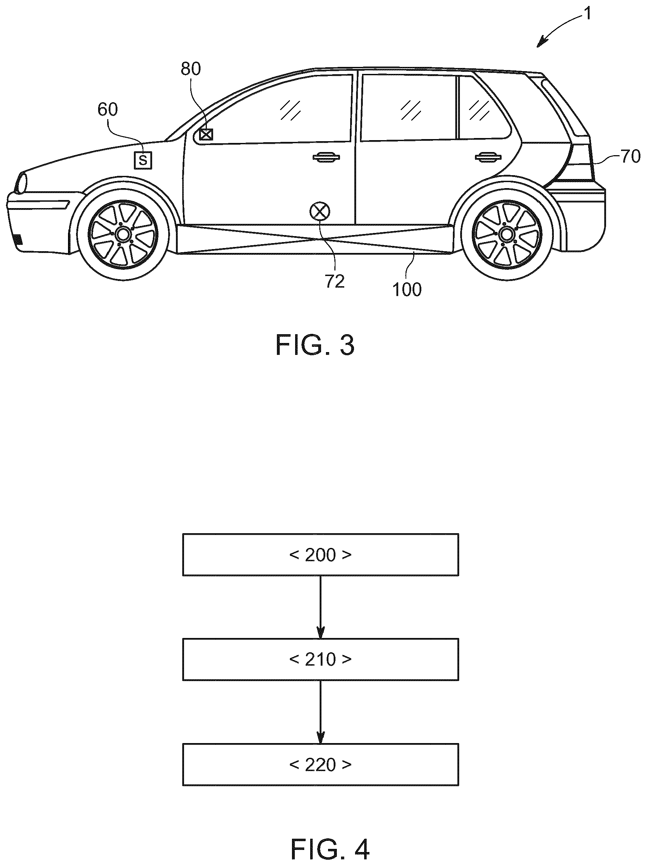

If an electric vehicle 1 with such a battery system 100 (see Fig. 3) runs over a bollard, automobile jacks, stones or similar objects this might create an underbody contact or impact event. The underbody protection structure 30 is designed in a way that the forces occurring due to the underbody contact event will be distributed into the support element 32 so that the battery cells 12 should not be influenced by this impact force. In an embodiment, the cooler 20 includes at least one cooling channel 22 filled with the cooling liquid 16 and at least one pressure detection channel 24 filled with a gaseous medium such as air, nitrogen, carbon dioxide or oxygen. At the end of the pressure detection channel 24 there is the pressure sensor 42 installed. If an underbody contact or impact event occurs, this will lead to an impact force on the underbody protection structure 30, which is introduced into the cooler 20 through the support element 32. In case of an underbody contact or impact event, the pressure detection channel 24 will be squeeze which will lead to a pressure pulse on the pressure sensor 42.

Fig. 2 shows a schematic illustration of an embodiment of the battery system 100 in a side view. The battery system 100 includes a battery pack 10, an underbody protection system 30 and a cooler 20 arranged between the underbody protection system 30 and the battery pack 10. The battery pack 10 includes a plurality of battery cells 12 arranged in at least one battery cell stack 14. The cooler 20 includes cooling channels 22 and pressure detection channels 24 separated from the cooling channels 22, wherein the cooling channels 22 and the pressure detection channels 24 are arranged inside of the cooler 20.

The underbody protection system 30 includes support elements 32, which includes at least one cross beam 34. The cross beam 34 is designed to distribute an impact force of an underbody impact event into the cooler 20 and prevent the battery cells 12 from being damaged by such an impact force.

The underbody protection structure 30 may also include at least one protrusion 36 located on the side of the underbody protection structure 30 facing away from the battery pack 10 and oriented towards a floor surface under a vehicle in which the battery system 100 is installed. The protrusion 36 can serve as a stiffening rib for the underbody protection structure 30. The protrusion 36 can also form a wear layer, which is removed in the event of underbody contact so that the remaining structure of the underbody protection structure 30 is not damaged.

Fig. 3 show a schematic illustration of an electric vehicle 1. The electric vehicle 1 includes a battery system 100 as described in the above-mentioned paragraphs an electric engine 60 and a chassis 70. The battery system 100 is installed on the bottom side of the chassis 70. The battery system 100 is located on the underside of the electric vehicle 1 in order to keep the vehicle's center of gravity 72 as low as possible and thus improve the handling of the electric vehicle 1.

Fig. 4 shows a flowchart of a method according to the invention for monitoring a battery system 100 and detecting underbody contact or impact events at such a battery system 100.

In a first step <200> of the method a battery system 100 as described in the previous sections is provided.

In a second step <210>, a continuously measuring a pressure of a gaseous medium in the at least one pressure detection channel 24 is carried out.

An underbody contact or impact event is detected in a step <220>, when a pressure pulse in the at least one pressure detection channel 24 due to an underbody contact or impact event of the underbody protection structure 30 exceeds a threshold value. With this measure, the driver will be informed that there was an underbody impact event. If the event was hard that the pressure pulse exceeds the threshold value, the driver will be informed by the dashboard 80 to go to a repair shop and have the battery system 100 checked. If the cooler 20 was damaged by an impact, a battery cell 12 could also be damaged. In case of a damaged battery cell 12 this could lead to electrolyte leaking from this battery cell 12 and increasing the risk of further damage to the battery pack 10 or harm to the environment. If the cooler 20 was not damaged by the underbody contact or impact event, the battery cells 12 will most like also not be affected by the underbody contact event and there is no risk. With this measurement of the underbody contact event it might be possible to decrease the weight of the underbody protection structure 30 and reduce weight and cost for the battery system 100.

### Reference signs

- 1: electric vehicle
- 10: battery pack
- 11: housing
- 12: battery cell
- 14: battery cell stack
- 16: cooling liquid
- 18: main channel

- 20: cooler
- 22: cooling channel
- 24: pressure detection channel
- 26: first metal sheet
- 28: second metal sheet

- 30: underbody protection structure
- 32: support element
- 34: cross beam
- 36: protrusion
- 38: stub channels

- 40: pressure detection device
- 42: pressure sensor
- 44: connection
- 46: loop
- 48: inlet

- 50: outlet
- 60: electric engine
- 70: chassis
- 72: center of gravity
- 80: dashboard

- 100: battery system

## Claims

1. A battery system (100), comprising:
a battery pack (10) comprising a housing (11) and a plurality of battery cells (12) accommodated within the housing (11);
a cooler (20) connected to the battery cells (12) and an underbody protection structure (30), wherein the cooler (20) is arranged between the underbody protection structure (30) and the battery pack (10), and wherein the cooler (20) comprises at least one cooling channel (22) and at least one pressure detection channel (24) separated from the cooling channel (22) and arranged inside the cooler (20); and
a pressure detection device (40) with a pressure sensor (42) connected to the pressure detection channel (24) and adapted to detect an underbody contact or impact event by monitoring the pressure in the pressure detection channel (24) by the pressure sensor (42), wherein the pressure detection channel (24) is filled with a fluid,
**characterized in that** the fluid is a gaseous medium.

2. The battery system (100) according to claim 1, wherein the cooler (20) comprises two metal sheets (26, 28) connected to each other, wherein the cooling channel (22) and the pressure detection channel (24) are arranged between the two metal sheets (26, 28).

3. The battery system (100) according to claim 2, wherein the cooling channel (22) and/or the pressure detection channel (24) are implemented in at least one of the sheets (26, 28).

4. The battery system (100) according to any of the preceding claims, wherein the cooling channel (22) is designed as a meandering cooling channel and the pressure detection channels (24) extend into loops of the meandering cooling channel.

5. The battery system (100) according to any of the preceding claims, wherein the underbody protection structure (30) comprises at least one support element (32) adapted to distribute a force occurring due to an underbody contact or impact event into the support element (32) via the cooler (20).

6. The battery system (100) according to claim 5, wherein the support element (32) comprises one or more cross beams (34).

7. The battery system (100) according to claim 5 or 6, wherein the support element (32) is adapted to distribute a force occurring due to an underbody event into an area of the cooler (20) wherein the pressure detection channel (24) is arranged.

8. The battery system (100) according to any of the preceding claims, wherein the underbody protection structure (30) comprises protrusions (36) located on the side of the underbody protective structure (30) facing away from the battery pack (10).

9. The battery system (100) according to any of the preceding claims, wherein the cooler (20) is manufactured by a roll-bonding process.

10. The battery system (100) according to claim 9, wherein the cooling channel (22) and/or the pressure detection channel (24) are formed by a high-pressure forming process.

11. An electric vehicle (1) comprising the battery system (100) according to any one of the preceding claims.

12. A method for monitoring a battery system (100), wherein the method comprises the steps of:
a) providing a battery system (100) as defined in claim 1;
b) continuously measuring a pressure of a fluid in the at least one pressure detection channel (24);
c) detecting an underbody contact or impact event, when a pressure pulse in the at least one pressure detection channel (24) exceeds a threshold value.

## Patentansprüche

1. Batteriesystem (100), umfassend:
ein Batteriepack (10), umfassend ein Gehäuse (11) und eine Mehrzahl von Batteriezellen (12), die innerhalb des Gehäuses (11) aufgenommen sind;
einen Kühler (20), der mit den Batteriezellen (12) und einer Unterbodenschutzstruktur (30) verbunden ist, wobei der Kühler (20) zwischen der Unterbodenschutzstruktur (30) und dem Batteriepack (10) angeordnet ist, und wobei der Kühler (20) zumindest einen Kühlkanal (22) und zumindest einen Druckerkennungskanal (24) umfasst, der von dem Kühlkanal (22) getrennt und innerhalb des Kühlers (20) angeordnet ist; und
eine Druckerkennungsvorrichtung (40) mit einem Drucksensor (42), der mit dem Druckerkennungskanal (24) verbunden ist und dazu ausgelegt ist, ein Unterbodenkontakt- oder -aufprallereignis durch Überwachen des Drucks in dem Druckerkennungskanal (24) durch den Drucksensor (42) zu erkennen, wobei der Druckerkennungskanal (24) mit einem Fluid gefüllt ist,
**dadurch gekennzeichnet, dass** das Fluid ein gasförmiges Medium ist.

2. Batteriesystem (100) nach Anspruch 1, wobei der Kühler (20) zwei Metallbleche (26, 28) umfasst, die miteinander verbunden sind, wobei der Kühlkanal (22) und der Druckerkennungskanal (24) zwischen den zwei Metallblechen (26, 28) angeordnet sind.

3. Batteriesystem (100) nach Anspruch 2, wobei der Kühlkanal (22) und/oder der Druckerkennungskanal (24) in zumindest einem der Bleche (26, 28) implementiert sind.

4. Batteriesystem (100) nach einem der vorhergehenden Ansprüche, wobei der Kühlkanal (22) als ein mäanderförmiger Kühlkanal ausgebildet ist; und wobei die Druckerkennungskanäle (24) sich in Schleifen des mäanderförmigen Kühlkanals erstrecken.

5. Batteriesystem (100) nach einem der vorhergehenden Ansprüche, wobei die Unterbodenschutzstruktur (30) zumindest ein Stützelement (32) umfasst, das dazu ausgelegt ist, eine aufgrund eines Unterbodenkontakt- oder -aufprallereignisses auftretende Kraft über den Kühler (20) in das Stützelement (32) zu verteilen.

6. Batteriesystem (100) nach Anspruch 5, wobei das Stützelement (32) einen oder mehrere Querträger (34) umfasst.

7. Batteriesystem (100) nach Anspruch 5 oder 6, wobei das Stützelement (32) dazu ausgelegt ist, eine aufgrund eines Unterbodenereignisses auftretende Kraft in einen Bereich des Kühlers (20) zu verteilen, in dem der Druckerkennungskanal (24) angeordnet ist.

8. Batteriesystem (100) nach einem der vorhergehenden Ansprüche, wobei die Unterbodenschutzstruktur (30) Vorsprünge (36) umfasst, die sich auf der Seite der Unterbodenschutzstruktur (30) befinden, die dem Batteriepack (10) abgewandte Seite ist.

9. Batteriesystem (100) nach einem der vorhergehenden Ansprüche, wobei der Kühler (20) durch ein Roll-Bonding-Verfahren hergestellt ist.

10. Batteriesystem (100) nach Anspruch 9, wobei der Kühlkanal (22) und/oder der Druckerkennungskanal (24) durch ein Hochdruckumformverfahren gebildet sind.

11. Elektrofahrzeug (1), umfassend das Batteriesystem (100) nach einem der vorhergehenden Ansprüche.

12. Verfahren zur Überwachung eines Batteriesystems (100), wobei das Verfahren die folgenden Schritte umfasst:
a) Bereitstellen eines Batteriesystems (100) gemäß Anspruch 1;
b) kontinuierliches Messen eines Drucks eines Fluids in dem zumindest einen Druckerkennungskanal (24); und
c) Erkennen eines Unterbodenkontakt- oder -aufprallereignisses, wenn ein Druckimpuls in dem zumindest einen Druckerkennungskanal (24) einen Schwellenwert überschreitet.

## Revendications

1. Système de batterie (100), comportant :
un bloc-batterie (10) comportant un boîtier (11) et une pluralité d'éléments de batterie (12) reçus au sein du boîtier (11) ;
un refroidisseur (20) connecté aux éléments de batterie (12) et à une structure de protection de soubassement (30), dans lequel le refroidisseur (20) est agencé entre la structure de protection de soubassement (30) et le bloc-batterie (10), et dans lequel le refroidisseur (20) comporte au moins un canal de refroidissement (22) et au moins un canal de détection de pression (24) séparé du canal de refroidissement (22) et agencé à l'intérieur du refroidisseur (20) ; et
un dispositif de détection de pression (40) doté d'un capteur de pression (42) connecté au canal de détection de pression (24) et conçu pour détecter un événement de contact ou d'impact avec le soubassement en surveillant la pression dans le canal de détection de pression (24) par le capteur de pression (42), dans lequel le canal de détection de pression (24) est rempli d'un fluide,
**caractérisé en ce que** le fluide est un milieu gazeux.

2. Système de batterie (100) selon la revendication 1, dans lequel le refroidisseur (20) comporte deux tôles métalliques (26, 28) reliées l'une à l'autre, dans lequel le canal de refroidissement (22) et le canal de détection de pression (24) sont agencés entre les deux tôles métalliques (26, 28).

3. Système de batterie (100) selon la revendication 2, dans lequel le canal de refroidissement (22) et/ou le canal de détection de pression (24) est/sont mis en œuvre dans au moins l'une des tôles (26, 28).

4. Système de batterie (100) selon l'une quelconque des revendications précédentes, dans lequel le canal de refroidissement (22) est conçu comme un canal de refroidissement sinueux et les canaux de détection de pression (24) s'étendent dans des boucles du canal de refroidissement sinueux.

5. Système de batterie (100) selon l'une quelconque des revendications précédentes, dans lequel la structure de protection de soubassement (30) comporte au moins un élément de support (32) conçu pour répartir une force se produisant en raison d'un événement de contact ou d'impact avec le soubassement dans l'élément de support (32) via le refroidisseur (20).

6. Système de batterie (100) selon la revendication 5, dans lequel l'élément de support (32) comporte une ou plusieurs traverses (34).

7. Système de batterie (100) selon la revendication 5 ou 6, dans lequel l'élément de support (32) est conçu pour répartir une force survenant en raison d'un événement avec le soubassement dans une zone du refroidisseur (20) dans laquelle le canal de détection de pression (24) est agencé.

8. Système de batterie (100) selon l'une quelconque des revendications précédentes, dans lequel la structure de protection de soubassement (30) comporte des saillies (36) situées sur le côté de la structure de protection de soubassement (30) orienté à l'opposé du bloc-batterie (10).

9. Système de batterie (100) selon l'une quelconque des revendications précédentes, dans lequel le refroidisseur (20) est fabriqué par un procédé de colaminage.

10. Système de batterie (100) selon la revendication 9, dans lequel le canal de refroidissement (22) et/ou le canal de détection de pression (24) est/sont formé(s) par un procédé de formage à haute pression.

11. Véhicule électrique (1) comportant le système de batterie (100) selon l'une quelconque des revendications précédentes.

12. Procédé de surveillance d'un système de batterie (100), dans lequel le procédé comporte les étapes suivantes :
a) la fourniture d'un système de batterie (100) selon la revendication 1 ;
b) la mesure en continu d'une pression d'un fluide dans l'au moins un canal de détection de pression (24) ;
c) la détection d'un événement de contact ou d'impact avec le soubassement, lorsqu'une impulsion de pression dans l'au moins un canal de détection de pression (24) dépasse une valeur seuil.
